# EUROPÄISCHE PATENTSCHRIFT

(11) **EP 3 793 793 B1**
(45) Veröffentlichungstag und Bekanntmachung des Hinweises auf die Patenterteilung: **04.09.2024**
(21) Anmeldenummer: 19742337.9
(22) Anmeldetag: 16.07.2019
(51) Int. Cl.: B29B 11/00, B29D 99/00, B29C 70/72, B29C 70/32, B29C 70/22, B29C 53/60, B29C 53/58, B29C 53/56, B29C 33/52, B29C 53/80, B29C 63/00, B29C 63/24

(54) **VERFAHREN ZUR HERSTELLUNG EINES HOHLPROFILS MIT VERAENDERLICHEN KRUEMMUNGEN UND QUERSCHNITTEN**
METHOD FOR PRODUCING A HOLLOW PROFILE HAVING VARIABLE CURVATURES AND CROSS-SECTIONS
PROCÉDÉ DE FABRICATION D'UN PROFILÉ CREUX PRÉSENTANT DES COURBURES ET DES SECTIONS TRANSVERSALES VARIABLES

(30) Priorität: 16.07.2018 DE 102018211793
(43) Veröffentlichungstag der Anmeldung: 24.03.2021
(73) Patentinhaber: SGL Carbon SE, 65201 Wiesbaden (DE)
(72) Erfinder: WOEGINGER, Andreas, 86405 Meitingen (DE); WUELLNER, Andreas, 86405 Meitingen (DE); ERBER, Andreas, 86405 Meitingen (DE); RUEGER, Olaf, 82024 Taufkirchen (DE); FROEHLICH, Felix, 82024 Taufkirchen (DE); KNAIER, Tobias, 82024 Taufkirchen (DE)
(86) Internationale Anmeldenummer: PCT/EP2019/069167
(87) Internationale Veröffentlichungsnummer: WO 2020/016257

(56) Entgegenhaltungen:
- EP-A1- 0 523 471
- DE-A1- 102006 006 337
- US-A1- 2016 288 431

## Beschreibung

Die vorliegende Erfindung betrifft ein Verfahren zur Herstellung von gewickelten faserverstärkten Hohlprofilen mit veränderlichen Krümmungen, Querschnitten und Materialdicken, die zudem eine zusätzliche Axialfaserverstärkung aufweisen.

Faserverstärkte Hohlprofile für die Industrie werden herkömmlicherweise durch Flechtverfahren hergestellt. Dabei laufen Spulen mit Fadenmaterial kreisförmig um eine Achse eines Flechtkerns und bilden unter der Erzeugung von Fadenkreuzungspunkten ein gleichmäßiges Geflecht aus Fadenmaterial auf dem Flechtkern, wie beispielsweise in der DE 199 25 941 B4 beschrieben. Alternativ besteht die Möglichkeit Hohlprofile durch Wickelverfahren herzustellen, wobei gegebenenfalls mit Bindemittel imprägniertes Fadenmaterial um einen Wickelkern herumgewickelt und auf diesem abgelegt wird.

Zu den kontinuierlichen Verfahren zählt das Strangzieh- oder auch Pultrusionsverfahren, bei dem mit einem Harz getränkte Fasern durch geformte Öffnungen gezogen werden, die die Formgebung des Hohlprofils ermöglichen. Die WO 2016/066510 beschreibt die kontinuierliche Herstellung von faserverstärkten mit einem Hartschaumkern gefüllten Profilen in einem dem Strangziehverfahren analogen Verfahren. Im Gegensatz zum klassischen Strangziehverfahren erfolgt die Tränkung mit dem Harz hierbei erst nach der Umwickelung des Schaumkerns. Die endgültige Formgebung findet anschließend beim Aushärten des Harzes in mehreren beheizten formgebenden Werkzeugen statt.

Die DE 10 2006 006337 A1 betrifft eine Bauteilstruktur aus übereinander angeordneten, gewickelten Lagen von Fadenscharen aus hochfesten Fäden und mindestens einer sich längs der Bauteilstruktur erstreckenden Fadenschar aus hochfesten Fäden, wobei die Fäden der sich längs erstreckenden Fadenschar durch eine Textilstruktur aus sich verkreuzenden Fadensystemen in ihrer Lage fixiert sind.

Die US 2016/288431 A1 betrifft neuartige Pul- Press- und ein Pul-Shape-Verfahren zur Herstellung von faserverstärkten Profilwerkstoffen, die mit einem Hartschaumkern, insbesondere einem PMI-Schaumkern, gefüllt sind.

EP 0 523 471 A offenbart ein Flechtverfahren zur Herstellung von Bauteilen mit mindestens einer Lage aus unidirektionalen Fasern, bei dem ein vorgefertigter Stützkern zusammen mit den unidirektionalen Fasern und den aus einer Flechtmaschine kommenden Flechtfasern durch ein Fadenauge gezogen wird, wobei die zumindest teilweise außen zu liegen kommenden Flechtfasern die unidirektionalen Fasern an den Stützkern andrücken.

Flechtverfahren lassen im Allgemeinen nur relativ geringe Verfahrensgeschwindigkeiten für die Herstellung eines Hohlprofils zu, da verschiedene Maschinenelemente der Flechtvorrichtung immer wieder Beschleunigung erfahren müssen, um Fadenkreuzungspunkte zu generieren.

Wickelverfahren sind im Vergleich dazu deutlich schneller, haben jedoch den Nachteil, dass die entstehenden Hohlprofile in ihrer Längsrichtung eine geringe Steifigkeit und Festigkeit aufweisen.

Es ist daher die Aufgabe der vorliegenden Erfindung, die erwähnten Nachteile zu überwinden und ein schnelles Verfahren zur Herstellung von Hohlprofilen bereitzustellen, das eine hohe Variabilität der entstehenden Hohlprofile zulässt.

Erfindungsgemäß wird diese Aufgabe durch ein Verfahren mit den Merkmalen des Patentanspruchs 1 gelöst.

Das Verfahren umfasst die folgenden Verfahrensschritte:
a. Translationsbewegung eines Kerns mit einer Kern-Längsachse entlang der Kern-Längsachse relativ zu einer Anlage, die mindestens eine erste und eine zweite Faserzuführung aufweist, wobei die Kern-Längsachse mindestens eine Richtungsänderung aufweist und/oder wobei der Kern mindestens eine Querschnittsänderung entlang der Kern-Längsachse aufweist;
b. Ablegen von Unidirektionalfäden der ersten Faserzuführung entlang der Kern-Längsachse zum Ausbilden einer Axialfaserverstärkung;
c. Umwickeln des Kerns mit Wickelfäden der zweiten Faserzuführung, die relativ zum Kern um diesen rotiert, wobei keine Fadenkreuzpunkte erzeugt werden, zum Ausbilden einer ersten Wickellage.

Das erfindungsgemäße Verfahren ist schnell und produktiv und ermöglicht eine hohe Variabilität bei Formgebung, Festigkeit und Materialien für das entstehende Hohlprofil. Dieses kann neben einer Axialfaserverstärkung insbesondere Querschnittsänderungen und/oder gekrümmte Abschnitte entlang seiner Längsachse aufweisen. Das Hohlprofil bildet nach dem vorliegenden Verfahren hauptsächlich die Krümmungen und/oder Querschnittsänderungen ab, die der Kern von Beginn an aufweist. Im Gegensatz dazu eignet sich das klassische Strangziehverfahren, bedingt durch den Prozessablauf, bei dem das entstehende Profil durch eine stationäre Form gezogen wird, ausschließlich für gerade, rohrförmige Hohlprofile. Auch die oben erwähnte Abwandlung des Verfahrens, bei dem das Hohlprofil noch nach der Umwicklung eines Kerns geformt wird, weist stärkere Beschränkungen bezüglich Krümmungen, Querschnitten und Materialdicken für die gebildeten Hohlprofile auf.

Im Folgenden werden Ausführungsformen und Aspekte der Erfindung mit Bezug auf die Figuren genauer erläutert. In den Figuren wird gezeigt:
Fig. 1 zeigt eine schematische Ansicht einer Ausführungsform zum Durchführen des erfindungsgemäßen Verfahrens;
Fig. 2 zeigt eine schematische Ansicht eines Beispiels eines gekrümmten Hohlprofils, welches gemäß dem erfindungsgemäßen Verfahren realisierbar ist;
Fig. 3a bis 3c illustrieren jeweils schematisch eine Querschnittsänderung in einem Hohlprofil;
Fig. 4 zeigt eine schematische Ansicht eines Hohlprofils mit Materialdicke D

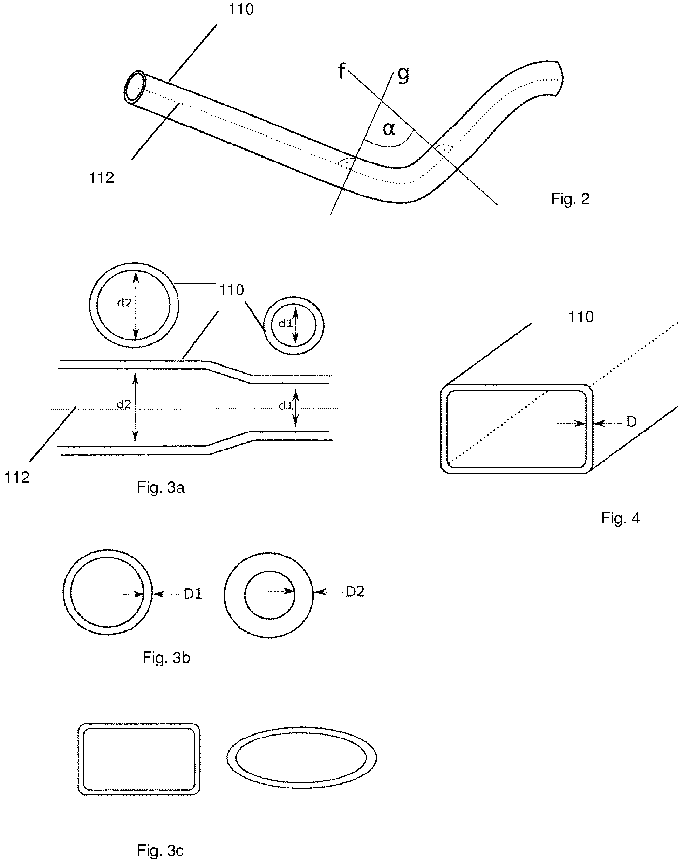

Die Fig. 2 zeigt ein Beispiel eines Hohlprofils 110 mit veränderlicher Krümmung, das durch das erfindungsgemäße Verfahren realisierbar ist. Unter einem gekrümmten Kern bzw. Hohlprofil wird ein Kern bzw. Hohlprofil verstanden, dessen Längsachse mindestens eine Krümmung aufweist, also mindestens eine Richtungsänderung vollzieht. Sowohl der Kern als auch das entstehende Hohlprofil weisen eine Längsachse auf, die im Folgenden als Kern- bzw. Profil -Längsachse bezeichnet werden.

Als Kern-Längsachse wird im Zuge der vorliegenden Erfindung die Achse bezeichnet, die in jeweiliger Längsrichtung durch die Flächenschwerpunkte der Querschnittsflächen des Kerns verläuft. Das bedeutet insbesondere, dass die Kern-Längsachse die Längsrichtung des Kerns als Vorzugsrichtung hat, jedoch keine Gerade sein muss, d.h. die Kern-Längsachse kann Richtungsänderungen vollziehen und der Kern somit eine oder mehrere Krümmungen entlang der Längsachse aufweisen.

Die Profil-Längsachse 112 erstreckt sich mittig in Längsrichtung durch das Hohlprofil und verläuft somit durch die Flächenschwerpunkte der Flächen, die vom Hohlprofil umgeben werden. Da das Hohlprofil üblicherweise gleichmäßig um den Kern herum ausgebildet wird, entspricht die Profil-Längsachse 112 im Allgemeinen der Kern-Längsachse. Auch die Profil-Längsachse muss dementsprechend keine Geraden sein, sondern kann Richtungsänderungen aufweisen.

Beispielhaft sei eine Richtungsänderung der Profil-Längsachse 112 in Fig. 2 beschrieben. Die Profil-Längsachse 112 weist eine erste Krümmung auf, die sich um etwa 50° dreht, was durch einen Krümmungswinkel α beschrieben werden kann. Der Krümmungswinkel α kann dabei als der maximale Winkel definiert werden, der von zwei Orthogonalen f und g der Profil-Längsachse 112 eingeschlossen wird, wobei die Orthogonale f vor der ersten Krümmung und die Orthogonale g nach der ersten Krümmung auf der Längsachse liegt. Umso geringer der Krümmungswinkel α ist, desto geringer ist die erste Krümmung der Längsachse, wobei ein gerades Hohlprofil keinen Krümmungswinkel im Sinne der vorliegenden Erfindung aufweist. Das erfindungsgemäße Verfahren ermöglicht auch die Herstellung von geraden Hohlprofilen oder Hohlprofilen mit geringen Krümmungswinkeln von unter 10°. Das erfindungsgemäße Verfahren zeichnet sich jedoch insbesondere dadurch aus, dass es auch die Herstellung von stark gekrümmten Hohlprofilen ermöglicht, die einen oder mehrere Krümmungswinkel von mehr als 10° aufweisen. Mit dem erfindungsgemäßen Verfahren kann der Krümmungswinkel α des Weiteren auch über 30° liegen. Wie in Fig. 2 gezeigt, eignet sich das erfindungsgemäße Verfahren auch für Krümmungswinkel über 45°, wobei das erfindungsgemäße Verfahren auch Hohlprofile mit Krümmungswinkeln von über 90° zulässt. Insbesondere ermöglicht das erfindungsgemäße Verfahren auch die Herstellung von noch stärker gekrümmten Hohlprofilen, wie zum Beispiel U-Rohren, bei denen der Krümmungswinkel 180° entspricht. Auch spiralförmige Hohlprofile, deren Krümmungswinkel mehr als 360° beträgt sind theoretisch möglich. Unterscheidet sich der Querschnitt zweier Positionen auf der Profil-Längsachse oder Kern-Längsachse liegt eine Querschnittsänderung im Sinne der vorliegenden Erfindung vor. Die Querschnittänderung umfasst dabei sowohl die Änderung der Querschnittsform, beispielsweise von einem quadratischen zu einem rechteckigen oder runden Querschnitt, wie in Fig. 3c dargestellt, aber auch die Änderung des Durchmessers oder Flächeninhalts. Fig. 3a zeigt exemplarisch eine Querschnittsänderung im Sinne der vorliegenden Erfindung durch die Änderung des Durchmessers eines Hohlprofils 110 von d2 zu d1, wobei d2 > d1. In Fig. 3b wird eine Querschnittsänderung durch eine Änderung des Flächeninhalts der Querschnittfläche des Hohlprofils gezeigt, die durch eine Vergrößerung der Wanddicke D1 zur Wanddicke D2 des Hohlprofils zustande kommt. Dementsprechend bildet das Hohlprofil nicht nur die Querschnittsänderungen des Kerns ab, sondern kann darüber hinaus auch zusätzliche Querschnittsänderungen, z. B. durch lokale Aufdickungen, aufweisen.

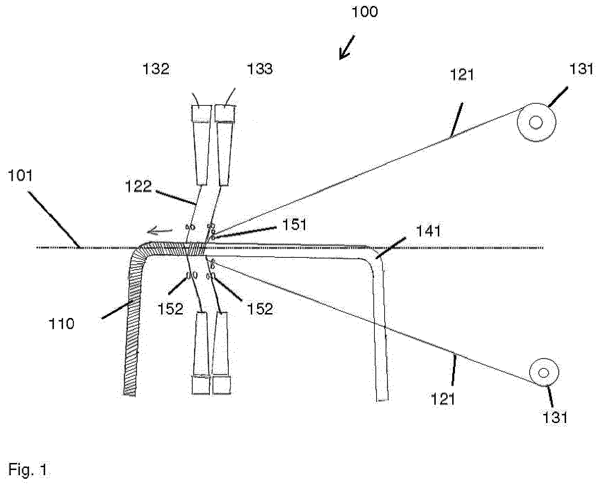

Der prinzipielle Aufbau einer Anlage 100 zum Durchführen eines Verfahrens zur Herstellung von Hohlprofilen, die neben einer Axialfaserverstärkung auch über veränderliche Krümmungen und Querschnitte verfügen können, ist in Fig. 1 dargestellt. Die Abbildung zeigt eine erste Faserzuführung 131 mit Unidirektionalfäden 121, die auf einem Kern 141 abgelegt werden, sowie eine zweite Faserzuführung 132 mit Wickelfäden 122, die um den Kern 141 gewickelt werden. Der Kern 141 wird im vorliegenden Verfahren nicht nachträglich geformt, sondern weist schon vor der Ablage der Unidirektional- und Wickelfäden Krümmungen und/oder Querschnittsänderungen auf, die von dem entstehenden Hohlprofil 110 abgebildet werden. In einer vorteilhaften Ausführungsform weist die erste Faserzuführung 131 Führungsösen 151 zur genauen Positionierung der Unidirektionalfäden 121 auf dem Kern 141 auf. Die Führungsösen 151 sind vorzugsweise direkt vor der Ablage der Unidirektionalfäden 121 auf dem Kern angebracht und können beispielsweise kleine Führungsröhren sein. Optional können auch zusätzliche Führungsösen 152 zur genauen Positionierung der Wickelfäden vor der Ablage auf den Kern angebracht werden. Hierzu eignen sich beispielsweise Ringe mit integrierten Führungsösen. In einer vorteilhaften Ausführungsform weist die Anlage 100 zudem noch eine dritte Faserzuführung 133 mit Wickelfäden auf, sodass eine triaxiale Faserstruktur ausgebildet werden kann. Die erste, zweite und dritte Faserzuführung weisen vorzugsweise Faserspannungseinheiten zum Einstellen einer Faserspannung auf und umfassen jeweils mindestens eine Faserspule.

Die einzelnen Verfahrensschritte des erfindungsgemäßen Verfahrens laufen im Wesentlichen gleichzeitig ab. Während der kontinuierlichen Vorwärtsbewegung des Kerns 141 entlang der Kern-Längsachse durch die Anlage 100 hindurch werden sowohl die Unidirektionalfäden 121 der ersten Faserzuführung 131 als auch die Wickelfäden 122 der zweiten Faserzuführung 132 auf den Kern 141 abgelegt. Die Anlage 100 weist eine Anlagen-Achse 101 auf, entlang der die Unidirektionalfäden 121 abgelegt werden und um die die zweite Faserzuführung 132 rotiert, wobei der Kern derart durch die Anlage hindurch geführt wird, dass die Kern-Längsachse am Ort der zweiten Faserzuführung 132 weitgehend mit der Anlagen-Achsen 101 übereinstimmt. Durch die Ablage der Unidirektionalfäden 121 der stationären ersten Faserzuführung 131 entlang der Anlagen-Achse 101 wird dabei die Axialfaserverstärkung erreicht, während der Kern gleichzeitig durch die um die Anlagen-Achse 101 rotierende zweite Faserzuführung 132 mit Wickelfäden 122 umwickelt wird, sodass eine erste Wickellage auf den Kern aufgebracht wird. Die Axialfaserverstärkung und die erste Wickellage werden somit in einem Durchlauf auf den gesamten Kern aufgebracht. Auch das entstehende Hohlprofil 110 weist damit eine Axialfaserverstärkung wie auch mindestens eine erste Wickellage auf, wobei es vorteilhaft ist, wenn die erste Wickellage über der Axialfaserverstärkung angeordnet ist, um diese zu fixieren.

In einer vorteilhaften Ausgestaltung kann die dritte Faserzuführung 133 dazu verwendet werden, um eine zweite Wickellage auszubilden. Die dritte Faserzuführung 133 rotiert dazu ebenso wie die zweite Faserzuführung 132 um die Anlagen-Achse 101 und relativ zum Kern um den Kern 141 und umwickelt den Kern 141 mit weiteren Wickelfäden. In einer vorteilhaften Ausführungsform rotieren die zweite und die dritte Faserzuführung in entgegengesetzte Richtungen um den Kern 141 und ermöglichen so z.B. die Bildung eines ausgeglichenen Winkelverbunds, bei dem sich die Wickelwinkel der ersten und zweiten Wickellage nur im Vorzeichen unterscheiden, z. B. 130°. Der Wickelwinkel beschreibt dabei jeweils denjenigen Winkel, der zwischen einem Wickelfaden und der Profil-Längsachse 112 bzw. Kern-Längsachse eingeschlossen wird, und wird durch die Translationsbewegung des Kerns entlang der Kern-Längsachse relativ zu der Anlage bestimmt, worauf weiter unten noch einmal eingegangen wird. In einer weiteren vorteilhaften Ausführungsform rotieren die zweite und dritte Faserzuführung 132 und 133 mit unterschiedlichen Umdrehungsgeschwindigkeiten in die gleiche Richtung oder in entgegengesetzte Richtungen, bevorzugt in entgegengesetzte Richtungen, womit ein Wickelverbund ermöglicht wird, bei dem sich die Wickelwinkel der ersten und zweiten Wickellage neben dem Vorzeichen auch in der Größe des Wickelwinkels unterscheiden.

Die Anlage 100 im erfindungsgemäßen Verfahren kann theoretisch um Kern 141 geführt werden, während dieser stationär bleibt. Gemäß einer vorteilhaften Ausführungsform wird jedoch der Kern 141 entlang einer Bahn durch die Anlage 100 geführt, wobei die Form der Bahn der der Kern-Längsachse entspricht. Die Bahn liegt dabei frei im Raum und ist somit nicht an ein Fließband, Schienen oder vergleichbares gekoppelt. Somit sind jegliche Richtungsänderungen der Kern-Längsachse auch für die Translationsbewegung des Kerns realisierbar, der beliebig nach oben, unten, links und rechts bewegt werden kann, während die Unidirektionalfäden 121 auf ihm abgelegt werden und die zweite und/oder dritte Faserzuführung den Kern mit Wickelfäden umwickeln. Der Kern 141 wird dabei derart durch die Anlage hindurchgeführt, dass die Kern-Längsachse am Ort der zweiten und/oder dritten Faserzuführung weitgehend mit der Anlagen-Achsen 101 übereinstimmt. Somit kann auch ein gekrümmter Kern gleichmäßig mit Fasermaterial belegt und umwickelt werden.

Bevorzugt führen die zweite und dritte Faserzuführung dabei eine rein rotatorische Bewegung um die Anlagen-Achse aus. Die rein rotatorische Bewegung der Maschinenelemente führt zu einem schnellen Profilherstellungsprozess, bei dem keine Fadenkreuzungspunkte erzeugt werden.

Gemäß einer vorteilhaften Ausgestaltung wird die Translationsbewegung des Kerns 141 durch mindestens einen Arm, vorzugsweise mindestens eines Industrieroboters (gemäß VDI-Richtlinie 2860), realisiert wird, wobei der mindestens eine Arm den Kern durch die Anlage zieht und/oder schiebt. Gemäß einem Ausführungsbeispiel wird der Kern an einem hinteren Ende durch einen ersten Arm festgehalten und mit einem vorderen Ende von diesem durch die Anlage geführt, insbesondere geschoben. Sobald die Unidirektionalfäden 121 der ersten Faserzuführung 131 sowie die Wickelfäden 122 der zweiten 132 und der optionalen dritten Faserzuführung 133 mindestens einen Teil am vorderen Ende des Kern 141 bedecken, kann ein zweiter Arm den teilweise umwickelten Kern 141 an diesem Teil festhalten und weiter durch die Anlage 100 führen, insbesondere ziehen, wobei der erste Arm den Kern 141 am hinteren Ende wieder loslassen kann. Vorzugsweise erfolgt der Wechsel vom ersten zum zweiten Arm in einem kontinuierlichen Übergang. Der zweite Arm kann nun noch das gesamte hintere Ende des Kerns 141 durch die Anlage führen, sodass der Kern am Ende komplett mit der Axialfaserverstärkung aus Unidirektionalfäden 121 und einer zweiten und optional dritten Wickellage umgeben ist.

Insbesondere durch die Translationsgeschwindigkeit, mit der die Translationsbewegung des Kerns 141 ausgeführt wird, wird der Wickelwinkel bestimmt, unter dem die Wickelfäden auf den Kern 141 aufgebracht werden. Der Wickelwinkel wird zudem auch durch die unterschiedlichen Umdrehungsgeschwindigkeiten der Faserzuführungen 132 und 133 bestimmt. In beiden Fällen kann der Wickelwinkel zwischen 0° und 90° liegen, wobei er in der Praxis z.B. zwischen 9° und 90° liegen kann. Bevorzugt liegt der Wickelwinkel zwischen 10° und 89°, besonders bevorzugt zwischen 15° und 85°, ganz besonders bevorzugt zwischen 20° und 80°. Der Wickelwinkel ist im Allgemeinen umso kleiner, je schneller die Translationsbewegung ausgeführt wird. Eine geringe Translationsgeschwindigkeit führt zu einem Wickelwinkel nahe 90°. Die oben angegebenen Wickelwinkel können sich im Vorzeichen +/- unterscheiden.

Eine Reduzierung der Translationsgeschwindigkeit, insbesondere bis hin zum Stillstand des Kerns 141, kann des Weiteren genutzt werden, um die Wickelfäden 122 mehrfach um einen Abschnitt des Kerns zu wickeln und somit eine lokale Erhöhung der Materialdicke D zu erreichen, also beispielsweise eine Verstärkung der Wanddicke D1 zur Wanddicke D2 wie sie in Fig. 3b dargestellt ist.

Auch der Wickelwinkel, der jeweils zwischen dem jeweiligen Wickelfaden und der Kern-Längsachse liegt, kann sich lokal unterscheiden, wenn der Kern mit verschiedenen Translationsgeschwindigkeiten durch die Anlage 100 geführt wird. Bei einer Ausführungsform der vorliegenden Erfindung findet die Translationsbewegung des Kern 141 während der Verfahrensschritte a bis c erst bei einer ersten Translationsgeschwindigkeit und anschließend bei einer zweiten Translationsgeschwindigkeit, die sich von der ersten Translationsgeschwindigkeit unterscheidet, statt, wobei das Umwickeln des Kerns 141 mit den Wickelfäden der zweiten Faserzuführung 132 bei der ersten Translationsgeschwindigkeit zum Ausbilden der ersten Wickellage mit einem ersten Wickelwinkel und/oder einer ersten Lagendicke führt und bei der zweiten Translationsgeschwindigkeit zum Ausbilden der ersten Wickellage mit einem zweiten Wickelwinkel und/oder einer zweiten Lagendicke führt, wobei sich der zweite Wickelwinkel und die zweiten Lagendicke jeweils von dem ersten Wickelwinkel und der ersten Lagendicke unterscheiden. Bei Vorhandensein der dritten Faserzuführung 133 wird bei der ersten Translationsgeschwindigkeit zudem die zweite Wickellage mit einem dritten Wickelwinkel und/oder einer dritten Lagendicke ausgebildet und bei der zweiten Translationsgeschwindigkeit die zweite Wickellage mit einem vierten Wickelwinkel und/oder einer vierten Lagendicke, wobei sich der vierte Wickelwinkel und die vierte Lagendicke jeweils von dem dritten Wickelwinkel und der dritten Lagendicke unterscheiden. In einer vorteilhaften Ausführungsform entsprechen der dritte und vierte Wickelwinkel jeweils dem ersten und zweiten Wickelwinkel mit umgekehrten Vorzeichen.

In einer vorteilhaften Ausgestaltung sind die erste, zweite und dritte Faserzuführung derart ausgebildet, dass die erste und zweite Wickellage über der Axialfaserverstärkung angeordnet werden. Auch weitere Faserzuführungen zum Ausbilden weiterer Wickellagen sind möglich.

Die Unidirektionalfäden der ersten Faserzuführung und die Wickelfäden können aus dem gleichen Material sein. In einer weiteren vorteilhaften Ausgestaltung können die Unidirektionalfäden der ersten Faserzuführung ein anderes Material als die Wickelfäden umfassen. Neben Fasern, bevorzugt Endlosfasern, kommen Rovings, Faserbänder, imprägnierte Fasern und Tapes, die mit einem Thermoplasten oder Duroplasten imprägniert sein können, sowohl als Unidirektionalfäden als auch als Wickelfäden der zweiten und dritten Faserzuführung in Betracht. Die Unidirektionalund Wickelfäden sind bevorzugt aus der Gruppe ausgewählt, welche aus Carbonfasern, Keramikfasern, Glasfasern, Aramidfasern, Basaltfasern, Polymerfasern und Mischungen aus zwei oder mehr der vorgenannten Materialien besteht.

Der Kern des erfindungsgemäßen Verfahrens kann sowohl ein Schaumkern als auch ein schmelzbarer Kern, aufblasbarer oder aufblähbarer Kern, Blaskern aus Kunststoff, sowie auswaschbarer Kern sein.

Durch die vielfältigen Variationsmöglichkeiten insbesondere für die Wickellagen (u.a. Material, Lagendicke, Wickelwinkel, Anzahl der Lagen) kann das entstehende Hohlprofil 110 an eine Vielzahl verschiedener Belastungen und Anforderungen angepasst werden. Das Verfahren ermöglicht so beispielsweise die Herstellung von Querträgern für Reisebusse, Dachlängsträger für PKWs sowie Längs- und Querträger in anderen Fahrzeugstrukturen. Auch Fußbodenstützen für Flugzeuge sowie Dachträger, Dachrelinge und Geländer können mit dem erfindungsgemäßen Verfahren realisiert werden.

## Patentansprüche

1. Verfahren zur Herstellung eines Hohlprofils (110) mit einer Profil-Längsachse (112), wobei das Hohlprofil (110) mindestens eines von mindestens einer Querschnittsänderung und mindestens einem gekrümmten Abschnitt aufweist, die folgenden Verfahrensschritte umfassend:
a. Translationsbewegung eines Kerns (141) mit einer Kern-Längsachse entlang der Kern-Längsachse relativ zu einer Anlage (100), die mindestens eine erste (131) und eine zweite Faserzuführung (132) aufweist, wobei die Kern-Längsachse mindestens eine Richtungsänderung aufweist und/oder wobei der Kern mindestens eine Querschnittsänderung entlang der Kern-Längsachse aufweist; **gekennzeichnet dadurch, dass** das Verfahren nachfolgende zusätzliche Schritte umfasst:
b. Ablegen von Unidirektionalfäden (121) der ersten Faserzuführung (131) entlang der Kern-Längsachse zum Ausbilden einer Axialfaserverstärkung;
c. Umwickeln des Kerns mit Wickelfäden (122) der zweiten Faserzuführung (132), die relativ zum Kern um diesen rotiert, wobei keine Fadenkreuzpunkte erzeugt werden, zum Ausbilden einer ersten Wickellage.

2. Verfahren nach Anspruch 1, wobei die Translationsbewegung des Kerns (141) während der Verfahrensschritte a bis c erst bei einer ersten Translationsgeschwindigkeit und anschließend bei einer zweiten Translationsgeschwindigkeit stattfindet, die sich von der ersten Translationsgeschwindigkeit unterscheidet, wobei das Umwickeln des Kerns (141) mit den Wickelfäden (122) der zweiten Faserzuführung (132) bei der ersten Translationsgeschwindigkeit zum Ausbilden der ersten Wickellage mit einem ersten Wickelwinkel und/oder einer ersten Lagendicke führt und bei der zweiten Translationsgeschwindigkeit zum Ausbilden der ersten Wickellage mit einem zweiten Wickelwinkel und/oder einer zweiten Lagendicke führt, wobei sich der zweite Wickelwinkel und die zweiten Lagendicke jeweils von dem ersten Wickelwinkel und der ersten Lagendicke unterscheiden.

3. Verfahren nach Anspruch 1 oder 2, wobei die Anlage (100) eine dritte Faserzuführung (133) aufweist, wobei die dritte Faserzuführung (133) relativ zum Kern (141) um diesen rotiert, wobei die zweite (132) und dritte Faserzuführung (133) in voneinander entgegengesetzte Richtung rotieren und wobei die dritte Faserzuführung (133) eine zweite Wickellage ausbildet.

4. Verfahren nach einem der vorherigen Ansprüche, wobei der Kern (141) derart umwickelt wird, dass die erste und/oder zweite Wickellage entlang der Profil-Längsachse (112) mit verschiedenen Materialdicken D ausgebildet wird bzw. werden.

5. Verfahren nach einem der vorherigen Ansprüche, wobei die Translationsbewegung des Kerns (141) durch mindestens einen Arm, vorzugsweise mindestens eines Industrieroboters, realisiert wird, wobei der mindestens eine Arm den Kern (141) durch die Anlage zieht und/oder schiebt.

6. Verfahren nach einem der vorherigen Ansprüche, wobei die Anlage eine Anlagen-Achse (101) aufweist und wobei die zweite und dritte Faserzuführung eine rein rotatorische Bewegung um die Anlagen-Achse (101) ausführen.

7. Verfahren nach einem der Ansprüche 3 bis 6, wobei die erste und zweite Wickellage über der Axialfaserverstärkung angeordnet werden.

8. Verfahren nach einem der Ansprüche 2 bis 7, wobei der erste Wickelwinkel und/oder zweite Wickelwinkel mehr als 9° und weniger als 90° beträgt.

9. Verfahren nach einem der Ansprüche 3 bis 6, wobei die Unidirektionalfäden (121) das gleiche oder ein anderes Material als die Wickelfäden (122) der zweiten und/oder dritten Faserzuführung aufweisen.

10. Verfahren nach einem der vorherigen Ansprüche, wobei die Unidirektionalfäden (121) und Wickelfäden (122) jeweils aus Fasern, bevorzugt Endlosfasern, bebinderten Rovings, Faserbändern, imprägnierten Fasern und/oder imprägnierten Tapes sind und/oder Carbonfasern, Glasfasern, Aramidfasern, Basaltfasern und/oder thermoplastische Fasern umfassen.

11. Verfahren nach einem der vorherigen Ansprüche, wobei der Kern (141) ein Schaumkern, schmelzbarer Kern, aufblasbarer oder aufblähbarer Kern, Blaskern aus Kunststoff, oder auswaschbarer Kern ist.

## Claims

1. Method for producing a hollow profile (110) having a profile longitudinal axis (112), the hollow profile (110) having at least one of at least one cross-sectional change and at least one curved portion, comprising the following method steps:
a. translational movement of a core (141) having a core longitudinal axis along the core longitudinal axis relative to a system (100) which has at least a first (131) and a second fiber feed (132), the core longitudinal axis having at least one change in direction and/or the core having at least one change in cross-section along the core longitudinal axis; **characterized in that** the method comprises the following additional steps:
b. depositing unidirectional threads (121) of the first fiber feed (131) along the core longitudinal axis to form an axial fiber reinforcement;
c. wrapping the core with winding threads (122) of the second fiber feed (132), which rotates around the core relative thereto, with no crosshair points being generated, in order to form a first winding layer.

2. Method according to claim 1, wherein the translational movement of the core (141) during method steps a to c takes place first at a first translational speed and then at a second translational speed which differs from the first translational speed, wherein the winding of the core (141) with the winding threads (122) of the second fiber feed (132) leads, at the first translational speed, to the formation of the first winding layer with a first winding angle and/or a first layer thickness and, at the second translational speed, to the formation of the first winding layer with a second winding angle and/or a second layer thickness, wherein the second winding angle and the second layer thickness each differ from the first winding angle and the first layer thickness.

3. Method according to either claim 1 or claim 2, wherein the system (100) has a third fiber feed (133), wherein the third fiber feed (133) rotates around the core (141) relative thereto, wherein the second (132) and third fiber feed (133) rotate in opposite directions to one another and wherein the third fiber feed (133) forms a second winding layer.

4. Method according to any of the preceding claims, wherein the core (141) is wound such that the first and/or second winding layer is/are formed with different material thicknesses D along the profile longitudinal axis (112).

5. Method according to any of the preceding claims, wherein the translational movement of the core (141) is implemented by at least one arm, preferably at least one industrial robot, wherein the at least one arm pulls and/or pushes the core (141) through the system.

6. Method according to any of the preceding claims, wherein the system has a system axis (101) and wherein the second and third fiber feeds carry out a purely rotary movement about the system axis (101).

7. Method according to any of claims 3 to 6, wherein the first and the second winding layer are arranged over the axial fiber reinforcement.

8. Method according to any of claims 2 to 7, wherein the first winding angle and/or second winding angle is more than 9° and less than 90°.

9. Method according to any of claims 3 to 6, wherein the unidirectional threads (121) comprise the same material as or a different material from the winding threads (122) of the second and/or third fiber feed.

10. Method according to any of the preceding claims, wherein the unidirectional threads (121) and winding threads (122) are each made from fibers, preferably continuous fibers, bound rovings, fiber bands, impregnated fibers and/or impregnated tapes and/or each comprise carbon fibers, glass fibers, aramid fibers, basalt fibers and/or thermoplastic fibers.

11. Method according to any of the preceding claims, wherein the core (141) is a foam core, fusible core, inflatable or expandable core, blow core made from plastics material, or washable core.

## Revendications

1. Procédé pour la fabrication d'un profilé creux (110) comportant un axe longitudinal de profilé (112), dans lequel le profilé creux (110) présente au moins l'un parmi au moins un changement de section transversale et au moins une section incurvée, comprenant les étapes de procédé suivantes :
a. déplacement en translation d'un noyau (141) comportant un axe longitudinal de noyau le long de l'axe longitudinal de noyau par rapport à un système (100) qui présente au moins un premier (131) et un deuxième moyen d'alimentation en fibres (132), dans lequel l'axe longitudinal de noyau présente au moins un changement de direction et/ou dans lequel le noyau présente au moins un changement de section transversale le long de l'axe longitudinal de noyau ; **caractérisé en ce que** le procédé comprend les étapes supplémentaires suivantes :
b. dépôt de fils unidirectionnels (121) du premier moyen d'alimentation en fibres (131) le long de l'axe longitudinal de noyau pour former un renforcement en fibres axial ;
c. enroulement de fils d'enroulement (122) du deuxième moyen d'alimentation en fibres (132) autour du noyau, lequel deuxième moyen d'alimentation en fibres tourne autour du noyau par rapport à celui-ci, dans lequel aucun point de réticule n'est créé, pour former une première couche d'enroulement.

2. Procédé selon la revendication 1, dans lequel le déplacement en translation du noyau (141) pendant les étapes de procédé a à c a lieu d'abord à une première vitesse de translation et ensuite à une seconde vitesse de translation qui est différente de la première vitesse de translation, dans lequel l'enroulement des fils d'enroulement (122) du deuxième moyen d'alimentation en fibres (132) autour du noyau (141) conduit, à la première vitesse de translation, à la formation de la première couche d'enroulement avec un premier angle d'enroulement et/ou une première épaisseur de couche et, à la seconde vitesse de translation, conduit à la formation de la première couche d'enroulement avec un second angle d'enroulement et/ou une seconde épaisseur de couche, dans lequel le second angle d'enroulement et la seconde épaisseur de couche sont respectivement différents du premier angle d'enroulement et de la première épaisseur de couche.

3. Procédé selon la revendication 1 ou 2, dans lequel le système (100) présente un troisième moyen d'alimentation en fibres (133), dans lequel le troisième moyen d'alimentation en fibres (133) tourne autour du noyau (141) par rapport à celui-ci, dans lequel les deuxième (132) et troisième moyens d'alimentation en fibres (133) tournent dans des directions opposées l'une à l'autre et dans lequel le troisième moyen d'alimentation en fibres (133) forme une seconde couche d'enroulement.

4. Procédé selon l'une des revendications précédentes, dans lequel le noyau (141) est enveloppé de telle sorte que la première et/ou la seconde couche d'enroulement sont formées le long de l'axe longitudinal de profilé (112) avec des épaisseurs de matériau D différentes.

5. Procédé selon l'une des revendications précédentes, dans lequel le déplacement en translation du noyau (141) est réalisé par au moins un bras, de préférence au moins un robot industriel, dans lequel l'au moins un bras tire et/ou pousse le noyau (141) à travers le système.

6. Procédé selon l'une des revendications précédentes, dans lequel le système présente un axe de système (101) et dans lequel les deuxième et troisième moyens d'alimentation en fibres effectuent un déplacement purement rotatif autour de l'axe de système (101).

7. Procédé selon l'une des revendications 3 à 6, dans lequel les première et seconde couches d'enroulement sont disposées au-dessus du renforcement en fibres axial.

8. Procédé selon l'une des revendications 2 à 7, dans lequel le premier angle d'enroulement et/ou le second angle d'enroulement sont supérieurs à 9° et inférieurs à 90°.

9. Procédé selon l'une des revendications 3 à 6, dans lequel les fils unidirectionnels (121) présentent le même matériau ou un matériau autre que celui des fils d'enroulement (122) du deuxième et/ou du troisième moyen d'alimentation en fibres.

10. Procédé selon l'une des revendications précédentes, dans lequel les fils unidirectionnels (121) et les fils d'enroulement (122) sont respectivement constitués de fibres, de préférence de fibres continues, stratifils liés, rubans de fibres, fibres imprégnées et/ou de bandes imprégnées et/ou comprennent des fibres de carbone, fibres de verre, fibres d'aramide, fibres de basalte et/ou fibres thermoplastiques.

11. Procédé selon l'une des revendications précédentes, dans lequel le noyau (141) est un noyau en mousse, un noyau fusible, un noyau soufflable ou gonflable, un noyau soufflé en matière plastique, ou un noyau lavable.
